**Europäisches Patentamt**

**European Patent Office**

**Office européen des brevets**

(11) Veröffentlichungsnummer: **0 257 246**
**A2**

(12) # EUROPÄISCHE PATENTANMELDUNG

(21) Anmeldenummer: 87109570.9

(22) Anmeldetag: 03.07.87

(51) Int. Cl.4: **H01F 41/18** , H01F 10/14 ,
G11B 5/31

(30) Priorität: 26.08.86 DE 3628950

(43) Veröffentlichungstag der Anmeldung:
02.03.88 Patentblatt 88/09

(84) Benannte Vertragsstaaten:
AT DE FR GB IT

(71) Anmelder: GRUNDIG E.M.V.
Elektro-Mechanische Versuchsanstalt Max
Grundig
Kurgartenstrasse 37
D-8510 Fürth(DE)

(72) Erfinder: Eberle, Karl, Dipl.-Ing Grundig E.M.V.
Max Grundig holländ. Stiftung & CO. KG
Kurgartenstrasse 37 D-8510 Fürth/Bay(DE)
Erfinder: Gukkenberger, Horst, Dipl.-Ing
Grundig E.M.V.
Max Grundig holländ. Stiftung & CO. KG
Kurgartenstrasse 37 D-8510 Fürth/Bay(DE)

(54) Verfahren zur Herstellung eines Magnetkopfes.

(57) Beschrieben ist ein Verfahren zur Herstellung
eines Magnetkopfes für ein Video-Magnetbandgerät
mit einer aufgesputterten weichmagnetischen Spaltregion, wobei die auf den Magnetkern aufgetragene
Schicht mittels einer Magnetronsputteranlage aufgesputtert ist. Durch Auswahl der Materialzusammensetzung des Legierungs-Trägers - Target - und
durch eine entsprechende Wahl der Sputterraten
wird von einem Target mit geringer magnetischer
Eigenschaft, weshalb für das Target eine größere
Materialdicke gewählt werden kann, eine Schicht mit
erhöhter magnetischer Eigenschaft auf den Magnetkern aufgesputtert.

## VERFAHREN ZUR HERSTELLUNG EINES MAGNETKOPFES

Die Erfindung betrifft ein Verfahren zur Herstellung eines Video-Magnetkopfes mit aufgesputterter Spaltregion, wobei der Magnetkern aus zwei weichmagnetischen Kernhälften mit dazwischenliegendem unmagnetischen Arbeitsspalt besteht, und im Bereich zwischen dem Arbeitsspalt und den Kernhälften sowie einer Glaseinlage eine abriebfeste weichmagnetische Schicht mittels einer Magnetronsputteranlage aufgesputtert ist.

Mit dem Fortschreiten der elektronischen Technologie haben schichtweise zusammengesetzte, magnetische Materialien eine allgemeine Geltung auf verschiedenen, technischen Gebieten gewonnen und spielen eine bedeutende Rolle auf dem Gebiet der Magnetköpfe, die zur magnetischen Aufzeichnung verwendet werden.

Bekannt ist, daß insbesondere Video-Magnetköpfe aus einem magnetischen Oxydmaterial wie polykristalliner Ferrit und einem magnetischen Material wie monokristallines Sendust in Schichtbauweise zusammengesetzt sind. Die Magnetköpfe können hierbei in längsgeschichteter Bauweise ausgeführt sein, so daß z. B. ein Magnetkern aus Sendust mit einem Träger aus magnetischem Material wie Ferrit zusammengefügt ist. Magnetköpfe mit unterschiedlichen Materialschichten sind erforderlich, um den hohen an sie gestellten technischen Anforderungen gerecht zu werden. Diese Anforderungen ergeben sich, da Aufzeichnungsmedien mit hoher Koerzitivkraft entwickelt wurden, wie beispielsweise Metallbänder und dampfbeschichtete Metallbänder, um Anforderungen an eine hohe magnetische Aufzeichnungsdichte gerecht zu werden. Diese Entwicklung ist von einer sehr starken Entwicklung magnetischer Materialien für Magnetköpfe begleitet gewesen. Da eben ein Magnetkopf mit einem Magnetkern, welcher aus einfachen magnetischen Materialien hergestellt ist, verschiedene Nachteile aufweist, wurde ein Magnetkopf vorgeschlagen, der zusammengesetzte magnetische Materialien verwendet, so z. B. einen magnetischen Metallkern aus Sendust, der zwischen einem magnetischen Oxydkern aus Ferrit eingefügt ist.

Es sind auch Magnetköpfe in Schichtform aufgebaut bekannt, bei denen der Magnetkern nur im Spaltbereich eine dünne Schicht aus Sendust aufweist. Diese Schicht wird zweckmäßigerweise mittels verschiedener Sputter-Techniken aufgesputtert. Vorteilhaft ist die Verwendung einer Magnetronsputteranlage, da hierbei die gewünschte Schichtdicke erzielt werden kann. Nachteilig ist jedoch, daß die Dicke des Legierungsträgers - Target - bei für den Verwendungszweck vorgegebener Legierung mit entsprechender magnetischer Eigenschaft relativ dünn gehalten werden muß, üblicherweise kleiner als 3 mm und aus physikalischen Gründen nur ein geringer Teil der Target-Oberfläche bevorzugt abgesputtert wird, so daß ein hoher Target-Verbrauch entsteht. Dickere, und daher wirtschaftlich verarbeitbare Targets können bei den benötigten Legierungen mit entsprechender magnetischer Eigenschaft aus technischen Gründen nicht verwendet werden.

Aufgabe der Erfindung ist es, ein wirtschaftliches Verfahren zum Aufsputtern einer vorgegebenen Materialschicht entsprechender magnetischer Eigenschaft im Spaltbereich des Magnetkerns eines Magnetkopfes für ein Video-Magnetbandgerät zu schaffen, wobei zum Aufsputtern eine Magnetronsputteranlage zu verwenden ist.

Diese Aufgabe wird erfindungsgemäß durch die kennzeichnenden Merkmale des Patentanspruchs gelöst.

Anhand einer perspektivischen Zeichnung wird an einem Beispiel die Spaltregion aufgezeigt, auf die eine Sendustschicht auf den Magnetkern eines Video-Magnetkopfes aufgesputtert wird. Der Magnetkern besteht aus zwei weichmagnetischen Kernhälften 1, 2 (vorzugsweise aus Ferrit), die über einen unmagnetischen Arbeitsspalt 3 verbunden sind. Der Arbeitsspalt wird durch beidseitig aufgebrachte Glaseinlagen 4 begrenzt, und die beiden Kerne sind so gleichzeitig mechanisch verbunden. Zwischen dem Arbeitsspalt 3 und den Kernhälften 1, 2 ist eine aufgesputterte weichmagnetische Schicht 5, 6 auf die jeweilige Kernhälfte 1, 2 aufgebracht. Die Schicht 5, 6 wird in bekannter Technik über eine Magnetron-Sputteranlage aufgesputtert. Die Materialzusammensetzung des Legierungsträgers (Target) wird hierbei so gewählt, daß die Vorteile des Magnetronsputterns nur unwesentlich beeinflußt werden, was dadurch erreicht wird, daß die Legierung, aus der das Target besteht, nur geringe magnetische Eigenschaften zeigt. Beim Sputtern von Sendust z. B. kann dies erreicht werden, indem die Aluminium-bzw. Siliziumanteile so erhöht werden, daß die genannte Legierung fast keine magnetischen Eigenschaften mehr aufweist. Beim Sputtervorgang werden dann die Sputterraten so gewählt bzw. eingestellt, daß, bedingt durch die unterschiedlichen Sputterraten, sich auf den Kernhälften eine Schicht aufbaut, die den geforderten magnetischen und mechanischen Anforderungen genügt, z. B. eine Materialzusammensetzung von Sendust aufweist.

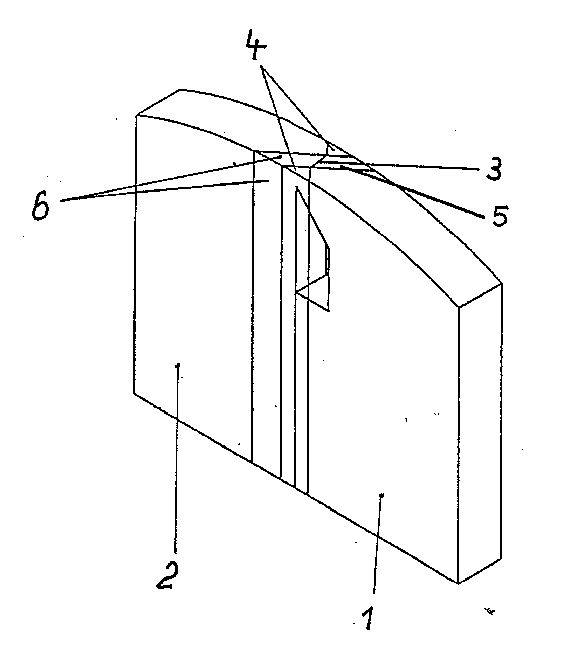

**Ansprüche**

Verfahren zur Herstellung eines Magnetkopfes mit aufgesputterter Spaltregion, wobei der Magnetkern aus zwei weichmagnetischen Kernhälften (1, 2) mit dazwischenliegendem unmagnetischen Arbeitsspalt (5) besteht, und im Bereich zwischen dem Arbeitsspalt und den Kernhälften sowie einer Glaseinlage (4) eine abriebfeste weichmagnetische Schicht (5, 6) mittels einer Magnetronsputteranlage aufgesputtert ist, **dadurch gekennzeichnet,** daß die weichmagnetisch aufgesputterte Schicht von einem Legierungsträger (Target) geringer magnetischer Eigenschaft, z. B. von einem Target aus einer Legierung von 10 % Si 9 % Al 81 % Fe abgesputtert wird, und sich durch unterschiedlich aufzubringende Sputterraten zu einer Schicht erhöhter magnetischer Eigenschaft, z. B. zu einer Legierung bestehend aus 9,6 % Si 5,4 % Al 85 % Fe aufbaut, oder daß gleichzeitig von wenigstens zwei unterschiedlichen Legierungsträgern mit geringer magnetischer Eigenschaft durch entsprechende Wahl der Sputterraten eine Schicht mit erhöhter magnetischer Eigenschaften aufgesputtert wird.